# EUROPÄISCHE PATENTSCHRIFT

(11) **EP 0 658 878 B1**
(45) Veröffentlichungstag und Bekanntmachung des Hinweises auf die Patenterteilung: **26.04.2000**
(21) Anmeldenummer: 94203568.4
(22) Anmeldetag: 08.12.1994
(51) Int. Cl.: G10L 19/00

(54) **System zum Übertragen eines Sprachsignals**
System for transmitting a speech signal
Système pour transmettre un signal de parole

(30) Priorität: 13.12.1993 DE 4342425
(43) Veröffentlichungstag der Anmeldung: 21.06.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Lorenz, Dietmar, D-20097 Hamburg (DE); Hellwig, Karl, D-20097 Hamburg (DE)
(74) Vertreter: Volmer, Georg, Dipl.-Ing.

(56) Entgegenhaltungen:
- WO-A-93/13516
- GB-A- 2 113 054
- US-A- 4 376 874
- ICASSP '87, Bd. 3, 6. - 9.April 1987 DALLAS, TX, USA, Seiten 1348-1351, J.F.LYNCH, J.G.JOSENHANS, R.E.CHROCHIERE 'speech/silence segmentation for real-time coding via rule based adaptive endpoint detection'

## Beschreibung

Die Erfindung betrifft das Gebiet von Übertragungssystemen zum Übertragen eines Sprachsignals, bei dem Anregungssignale aus einem Codebuchspeicher ermittelt und übertragen werden, aus denen im Empfänger mit Hilfe eines entsprechenden Codebuchspeichers das Sprachsignal zurückgewonnen wird.

Ein derartiges Übertragungssystem ist allgemein bekannt, beispielsweise aus dem Buch "Advances in Speech Coding" von Bishnu S. Atal, Vladimir Cuperman, Allen Gersho, insbesondere Seiten 69 bis 79. Dieses Übertragungssystem wird insbesondere beim Mobilfunk zur Übertragung von Sprachsignalen zwischen einer mobilen Station und einer festen Station verwendet. Die mobile Station ist allgemein batteriebetrieben, und zum Einsparen von Energie zur Verlängerung der Batterielebensdauer ist es bekannt, während Sprachpausen den Sender mit zugehörigen Teilen abzuschalten, da dieser die meiste Leistung benötigt. Durch den sehr komplexen Aufbau des Sprachcodierers benötigt dieser jedoch ebenfalls eine wesentliche Leistung, insbesondere dadurch, daß für jeden Sprachrahmen alle Speicherplätze des Speichers adressiert und alle Ausgangssignale, die auch als Anregungsvektoren bezeichnet werden, gefiltert werden müssen, um denjenigen Anregungsvektor zu finden, der die geringste Energie bei dem Vergleich ergibt.

Aus der WO 93/13516, die ebenfalls ein derartiges Übertragungssystem beschreibt, ohne jedoch Einzelheiten zum Sprachcodierer anzugeben, ist es bekannt, in Sprachpausen den Sprachcodierer weitgehend abzuschalten und nur wenige Parameter, insbesondere LPC-Koeffizienten und Autokorrelations-Koeffizienten, weiter zu erzeugen, aus denen der Detektor die Sprachpausen erkennt und aus denen außerdem in Sprachpausen Informationen für ein zu übertragendes Hintergrundgeräusch gewonnen werden. Dabei ist davon auszugehen, daß auch die Filteranordnung in dem Sprachcodierer abgeschaltet wird, da deren Ausgangssignale während Sprachpausen nicht direkt benötigt werden. Wenn jedoch dann das Sprachsignal wieder einsetzt, benötigt das Filter nach dem Einschalten eine gewisse Einschwingzeit, so daß während einer Übergangs-Zeitspanne nicht optimale Parameter für die Übertragung der Sprachsignale zur Verfügung stehen.

Das Dokument ICASSP'87, April 1987, Dallas, Texas (USA), Seiten 1348-1351 offenbart ein Verfahren, um den störend empfundenen Übergang zwischen Sprache und Sprachpause zu vermeiden. Hier wird das Sprachsignal mit einem simulierten Untergrundgeräusch am Decoderausgang verschmolzen.

Aufgabe der Erfindung ist es daher, ein Übertragungssystem der bekannten Art anzugeben, bei dem in Sprachpausen ebenfalls eine wesentliche Leistungseinsparung möglich ist und bei dem dennoch beim Wiedereinsetzen eines Sprachsignals nach einer Sprachpause möglichst unmittelbar optimale Parameter für die Übertragung der Sprachsignale zur Verfügung stehen.

Diese Aufgabe wird erfindungsgemäß dadurch gelöst, daß in Sprachpausen die Selektionsmittel im Sprachcodierer abgeschaltet werden und dem Filter ein vom Sprachsignal abgeleitetes weiteres Signal zugeleitet wird.

Durch das Abschalten der Selktionsmittel wird auch das Auslesen und das ebenfalls sehr aufwendige Filtern aller gespeicherten Anregungsvektoren abgeschaltet, da dies alles den größten Rechenaufwand darstellt, und nur die Funktion der Filteranordnung aufrechterhalten, da diese eine geringe Leistung erfordert. Da beim Abschalten der Selektionsmittel die Filteranordnung jedoch kein Eingangssignal mehr erhalten würde, erhält dieses ein aus dem Sprachsignal abgeleitetes Signal, und zwar für jeden Srpachabschnitt nur einen einzigen Anregungsvektor, der dem optimalen Anregungsvektor entspricht. Nach dem Wiedereinsetzen des Sprachsignals nach einer Sprachpause entsteht dann auch in der Filteranordnung ein weicherer Übergang auf die dann wieder einsetzende vollständige Sprachcodierung.

Um möglichst optimale Parameter für die Übertragung der Sprachsignale zu erhalten, ist es bekannt, daß der erste Speicher aus einem ersten Teilspeicher, der vorgegebene Anregungsvektoren enthält, und aus einem zweiten Teilspeicher besteht, der zusätzliche Anregungsvektoren enthält, die außerhalb von Sprachpausen aus der Summe eines gewichteten Anregungsvektors des ersten Teilspeichers und eines gewichteten Anregungsvektors des zweiten Teilspeichers gebildet und in den zweiten Teilspeicher eingeschrieben werden. Die Verwendung der zusätzlichen Anregungsvektoren bewirkt nämlich, daß weitgehend optimale Anregungsvektoren erhalten werden, die ein sehr kleines Differenzsignal, d.h. ein kleines Fehlersignal ergeben. Das ist insbesondere in stimmhaften Sprachabschnitten effektiv, da dort das Sprachsignal fast periodisch ist und sich praktisch niemals abrupt ändert. Dies gilt grundsätzlich auch beim Wiedereinsetzen eines Sprachsignals nach einer Sprachpause. Um daher auch in Sprachpausen als zusätzliche Anregungsvektoren möglichst aktuelle Werte zu haben, die beim Wiedereinsetzen des Sprachsignals unmittelbar verwendet werden können, ist es zweckmäßig, daß während Sprachpausen das dem Filter zugeführte weitere Signal in den zweiten Teilspeicher eingeschrieben wird. Dadurch stehen beim Wiedereinsetzen des Sprachsignals im zweiten Teilspeicher zusätzliche Anregungsvektoren zur Verfügung, die auch zu diesem Zeitpunkt das Ermitteln weitgehend optimaler Parameter für die Übertragung der Sprachsignale ermöglichen.

Ausführungsbeispiele der Erfindung werden nachstehend anhand der Zeichnung näher erläutert. Es zeigen:
**Fig. 1** schematisch ein Übertragungssystem mit einem Sender und einem Empfänger,
**Fig. 2** ein Blockschaltbild eines Sprachcodierers in einem Sender,
**Fig. 3** den Aufbau der Speicheranordnung aus zwei Teilspeichern.

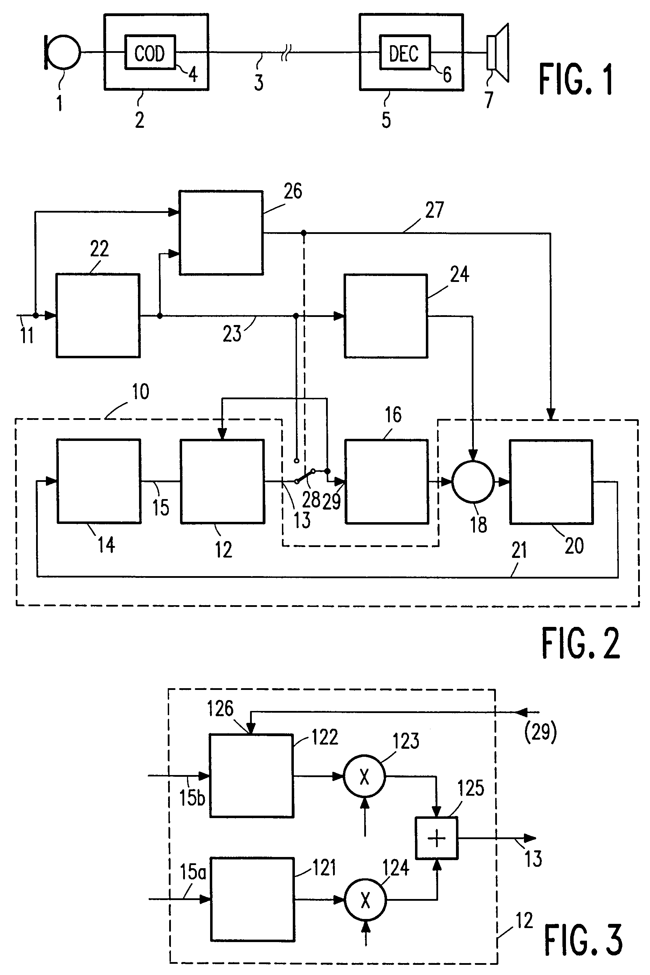

In dem Übertragungssystem nach Fig. 1 wird ein durch ein Mikrofon 1 erzeugtes Sprachsignal durch den Codierer 4 im Sender 2 in ein codiertes Sprachsignal umgewandelt. Dieses codierte Sprachsignal, das tatsächlich normalerweise aus der Angabe eines Anregungsvektors für einen Abschnitt des Sprachsignals besteht, wird durch den Sender 2 über die Übertragungsstrecke 3 zum Empfänger 5 übertragen. Die Übertragungsstrecke kann z.B. eine Funkstrecke, eine Kupferleitung oder eine Glasfaserleitung sein. Im Empfänger 5 wird das codierte Sprachsignal durch den Decodierer 6 wieder in ein rekonstruktiertes Sprachsignal zurückübertragen, das durch den Lautsprecher 7 in ein akustisches Signal umgewandelt wird.

Der in Fig. 1 dargestellte Sprachcodierer 4 ist in Fig. 2 näher dargestellt und enthält eine Speicheranordnung 12, die von einer Steueranordnung 14 über eine Verbindung 15 Adressen und Steuersignale erhält. Die Speicheranordnung 12 enthält unterschiedliche Anregungsvektoren in einer Anzahl von Speicherstellen, die von der Steuerschaltung 14 periodisch aufeinanderfolgend angesteuert und ausgelesen werden. Die ausgelesenen Anregungsvektoren erscheinen nach einer Gewichtungsstufe, die hier nicht im einzelnen angegeben ist, auf der Leitung 13, die mit einem Anschluß eines Umschalters 28 verbunden ist. Dieser Umschalter ist tatsächlich selbstverständlich elektronisch ausgeführt. Zunächst wird angenommen, daß sich der Umschalter 28 in der unteren Stellung befindet, so daß die über die Leitung 13 ausgelesenen gewichteten Anregungsvektoren dem Eingang 29 einer ersten Filteranordnung 16 zugeführt werden.

Das zu codierende Sprachsignal wird in digitalisierter Form einem Eingang 11 zugeführt, der mit einem Filter 22 verbunden ist. Der Übersichtlichkeit halber ist nicht dargestellt eine Anordnung zur Ableitung verschiedener Parameter aus dem Sprachsignal, insbesondere zur Ableitung von LPC-Koeffizienten. Diese LPC-Koeffizienten werden dem Filter 22 (LPC-Analyse-Filter) zugeführt, das dadurch auf der Leitung 23 das sogenannte Restsignal erzeugt. Derartige Restsignale stellen auch die in der Speicheranordnung 12 gespeicherten Anregungsvektoren dar.

Das Restsignal auf der Leitung 23 wird einem Filter 24 zugeführt, das ebenso aufgebaut wie die Filteranordnung 16 und auch dieselben Filterkoeffizienten verwendet. Die Ausgangssignale der Filter 16 und 24 werden einer Differenzbildungsstufe 18 zugeführt, die die Differenz zwischen beiden Signalen bildet, und dieses Differenzsignal wird auch als Fehlersignal bezeichnet, da dieses Differenzsignal ein Maß für den Unterschied zwischen dem Sprachsignal am Eingang 11 und einem aus den Anregungsvektoren zurückgewonnenes Sprachsignal darstellt. Dieses Differenzsignal wird einer Verarbeitungseinheit 20 zugeführt, die die mittlere Energie des Fehlersignals bildet. Diese mittlere Energie wird über die Leitung 21 der Steuerschaltung 14 zugeführt, die die Adresse desjenigen Anregungsvektors festhält, bei dem die geringste mittlere Energie festgestellt wird. Diese Adresse wird als ein Parameter des zu übertragenden Sprachsignals an die Empfangsstelle übertragen.

Es ist ferner ein Detektor 26 vorgesehen, der das dem Eingang 11 zugeführte Sprachsignal sowie das auf der Leitung 23 erzeugte Restsignal empfängt und daraus ermittelt, ob dem Eingang 11 ein wirkliches Sprachsignal zugeführt wird oder ob gerade eine Sprachpause auftritt, in der lediglich ein Hintergrundgeräusch dem Eingang 11 zugeführt wird. Wenn der Detektor 26 eine Sprachpause erkennt, wird über die Leitung 27 ein Signal abgegeben, das die in dem Bereich 10 angeordneten Elemente abschaltet, nämlich die Steuerschaltung 14 mit der Speicheranordnung 12 sowie die Differenzbildungsstufe 18 und die Verarbeitungsanordnung 20. Da in diesem Falle die Filteranordnung 16 aber keine Anregungsvektoren mehr empfangen würde, wird durch das Signal auf der Leitung 27 auch der Umschalter 28 betätigt, so daß nun dem Eingang 29 der Filteranordnung 16 das Restsignal auf der Leitung 23 zugeführt wird. Dieses entspricht ja weitgehend dem optimalen Anregungsvektor, der über die Leitung 13 jeweils abgegeben wird, also nur jeweils ein Anregungsvektor. Wenn danach wieder ein Sprachsignal am Eingang 11 auftritt und die im Bereich 10 enthaltenen Elemente wieder eingeschaltet werden und der Umschalter 28 in die untere Lage zurückgeschaltet wird, empfängt das Filter 16 über die Leitung 13 wieder alle gespeicherten und gewichteten Anregungsvektoren, von denen der am besten geeignete ausgewählt werden muß.

Der Eingang 29 des Filters 16 ist ferner mit einem Dateneingang der Speicheranordnung 12 verbunden. Wie in Fig. 3 dargestellt, besteht die Speicheranordnung 12 tatsächlich aus zwei Teilspeichern 121 und 122, die jeweils über Adreßeingänge 15a und 15b von der Steuerschaltung 14 in Fig. 2 angesteuert werden. Der Teilspeicher 121 ist allgemein ein Festwertspeicher, der eine Anzahl fest gespeicherter Anregungsvektoren enthält. Der Teilspeicher 122 ist dagegen ein beschreibbarer Speicher, der an einem Eingang 126 den jeweils zuletzt erzeugten optimalen Anregungsvektor von der Leitung 13 empfängt. Der Anregungsvektor auf der Leitung 13 wird durch einen Summierer 125 gebildet, der die Summe aus einem Anregungsvektor aus dem Teilspeicher 121, der in einem Multiplizierer 124 mit einem ersten Gewichtungskoeffizienten multipliziert wird, und einem Anregungsvektor aus dem zweiten Teilspeicher 122, der in einem weiteren Multiplizierer 123 mit einem allgemein unterschiedlichen Gewichtungskoeffizienten multipliziert wird, erzeugt. Der erste Teilspeicher 121 kann auch aus mehreren Festwertspeichern bestehen, auf die z.B. abhängig von einer Stimmhaft-Stimmlos-Erkennung im Sprachsignal umgeschaltet wird.

Da in Sprachpausen die Speicheranordnung 12 in Fig. 2 abgeschaltet ist, werden auf der Leitung 13 dann auch keine Anregungsvektoren erzeugt. Der Dateneingang 126 des zweiten Teilspeichers 122 in Fig. 2 ist daher direkt mit dem Eingang 29 der Filteranordnung 16 verbunden, die also auch in Sprachpausen ein Signal empfängt, nämlich das Restsignal auf der Leitung 23. Auf diese Weise enthält der zweite Teilspeicher 122 auch in Sprachpausen jeweils die letzten Anregungsvektoren, so daß beim Umschalten auf ein Sprachsignal praktisch gleich wieder eine Folge von fast optimalen Anregungsvektoren auf der Leitung 13 erhalten wird.

## Patentansprüche

1. Übertragungssystem zur Übertragung eines Sprachsignals mit einem Sender, der einen Sprachcodierer enthält, der versehen ist mit einem Speicher (12) zum Speichern von Anregungssignalen, einer Filteranordnung (16) zum Filtern der Anregungssignale und Selektionsmitteln (14, 18, 20) zum Vergleichen eines aus dem Sprachsignal abgeleiteten Signals und des Ausgangssignals des Filters (16) und zum Selektieren des optimalen Anregungssignals, wobei der Sender (2) ferner einen Detektor (26) zur Erkennung von Sprachpausen und zum Abschalten von zumindest Teilen des Sprachcodierers bei einer erkannten Sprachpause und Mittel (3) zur Übertragung einer Angabe des optimalen Anregungssignals zu einem Empfänger (5) enthält, der versehen ist mit einem Sprachdecodierer (6) zur Rückgewinnung des optimalen Anregungssignals und des Sprachsignals,
dadurch gekennzeichnet, daß der Detektor (26) vorgesehen ist zum Abschalten der Selektionsmittel (14, 18, 20) bei Sprachpausen und zum Zuführen eines aus dem jeweils vor der Sprachpause letzten Sprachsignal abgeleiteten Signals an das Filter (16).

2. Übertragungssystem nach Anspruch 1,
dadurch gekennzeichnet, daß der Speicher (12) versehen ist mit einem ersten Teilspeicher (121) zum Speichern vorgegebener Anregungssignale und mit einem zweiten Teilspeicher (122) zum Speichern von zusätzlichen Anregungssignalen und daß der Sprachcodierer versehen ist mit Mitteln, um außerhalb von Sprachpausen in den zweiten Teilspeicher (122) die Summe eines gewichteten Anregungssignals des ersten Teilspeichers (121) und eines gewichteten Anregungssignals des zweiten Teilspeichers (122) einzuschreiben und während Sprachpausen in den zweiten Teilspeicher (122) ein aus dem jeweils vor der Sprachpause letzten Sprachsignal agbeleitetes Signal einzuschreiben.

3. Sender zum Übertragen eines Sprachsignals mit einem Sprachcodierer mit einem Codebuchspeicher (12) zum Speichern von Anregungssignalen, einer Filteranordnung (16) zum Filtern der Anregungssignale und Selektionsmitteln (14, 18, 20) zum Vergleichen eines aus dem Sprachsignal abgeleiteten Signals und des Ausgangssignals des Filters (16) und zum Selektieren des optimalen Anregungssignals, und mit einem Detektor (26) zur Erkennung von Sprachpausen und zum Abschalten von zumindest Teilen des Sprachcodierers bei einer erkannten Sprachpause,
dadurch gekennzeichnet, daß der Detektor (26) vorgesehen ist zum Abschalten der Selektionsmittel (14, 18, 20) bei Sprachpausen und zum Zuführen eines aus dem jeweils vor der Sprachpause letzten Sprachsignal abgeleiteten Signals an das Filter (16).

4. Sender nach Anspruch 3,
dadurch gekennzeichnet, daß der Speicher (12) versehen ist mit einem ersten Teilspeicher (121) zum Speichern vorgegebener Anregungssignale und mit einem zweiten Teilspeicher (122) zum Speichern von zusätzlichen Anregungssignalen und daß der Sprachcodierer versehen ist mit Mitteln, um außerhalb von Sprachpausen in den zweiten Teilspeicher (122) die Summe eines gewichteten Anregungssignals des ersten Teilspeichers (121) und eines gewichteten Anregungssignals des zweiten Teilspeichers (122) einzuschreiben und während Sprachpausen in den zweiten Teilspeicher (122) ein aus dem jeweils vor der Sprachpause letzten Sprachsignal abgeleitetes Signal einzuschreiben.

5. Mobilfunkgerät mit einem Sender zum Übertragen eines Sprachsignals, der einen Sprachcodierer mit einem Codebuchspeicher (12) zum Speichern von Anregungssignalen, eine Filteranordnung (16) zum Filtern der Anregungssignale und Selektionsmittel (14, 18, 20) zum Vergleichen eines aus dem Sprachsignal abgeleiteten Signals und des Ausgangssignals des Filters und zum Selektieren des optimalen Anregungssignals enthält, und mit einem Detektor (26) zur Erkennung von Sprachpausen und zum Abschalten von zumindest Teilen des Sprachcodierers bei einer erkannten Sprachpause,
dadurch gekennzeichnet, daß der Detektor (26) vorgesehen ist zum Abschalten der Selektionsmittel (14, 18, 20) bei Sprachpausen und zum Zuführen eines aus dem jeweils vor der Sprachpause letzten Sprachsignal abgeleiteten Signals an das Filter (16).

6. Mobilfunkgerät nach Anspruch 5,
dadurch gekennzeichnet, daß der Speicher (12) versehen ist mit einem ersten Teilspeicher (121) zum Speichern vorgegebener Anregungssignale und mit einem zweiten Teilspeicher (122) zum Speichern von zusätzlichen Anregungssignalen und daß der Sprachcodierer versehen ist mit Mitteln, um außerhalb von Sprachpausen in den zweiten Teilspeicher (122) die Summe eines gewichteten Anregungssignals des ersten Teilspeichers (121) und eines gewichteten Anregungssignals des zweiten Teilspeichers (122) einzuschreiben und während Sprachpausen in den zweiten Teilspeicher (122) ein aus dem jeweils vor der Sprachpause letzten Sprachsignal abgeleitetes Signal einzuschreiben.

7. Verfahren zum Übertragen eines Sprachsignals, umfassend das Speichern von Anregungssignalen, das Filtern der Anregungssignale, das Vergleichen eines aus dem Sprachsignal abgeleiteten Signals und des gefilterten Anregungssignals, das Selektieren des optimalen Anregungssignals und die Erkennung von Sprachpausen und das Unterdrücken von zumindest Teilen des Verfahrens bei einer erkannten Sprachpause,
gekennzeichnet durch das Unterdrücken des Selektierens bei Sprachpausen und das Zuführen eines aus dem jeweils vor der Sprachpause letzten Sprachsignal abgeleiteten Signals an das Filter.

8. Verfahren nach Anspruch 7,
dadurch gekennzeichnet, daß der Speicher (12) versehen ist mit einem ersten Teilspeicher (121) zum Speichern vorgegebener Anregungssignale und mit einem zweiten Teilspeicher (122) zum Speichern von zusätzlichen Anregungssignalen, wobei außerhalb von Sprachpausen in den zweiten Teilspeicher (122) die Summe eines gewichteten Anregungssignals des ersten Teilspeichers (121) und eines gewichteten Anregungssignals des zweiten Teilspeichers (122) und während Sprachpausen in den zweiten Teilspeicher (122) das aus dem jeweils vor der Sprachpause letzten Sprachsignal abgeleitete Signal eingeschrieben wird.

## Claims

1. A transmission system for transmitting a speech signal comprising a transmitter, which transmitter includes a speech coder that has a memory (12) for storing excitation signals, has a filter arrangement (16) for filtering the excitation signals and selection means (14, 18, 20) for comparing a signal derived from the speech signal with the output signal of the filter (16), and for selecting the optimum excitation signal, and which transmitter (2) includes a detector (26) for detecting speech pauses and for turning off at least parts of the speech coder when a speech pause is detected and means (3) for transmitting the optimum excitation signal to a receiver (5), which receiver includes a speech decoder (6) for recovering the optimum excitation signal and the speech signal, characterized in that the detector (26) is provided for turning off the selection means (14, 18, 20) in the case of speech pauses and for applying to the filter (16) a signal derived from the speech signal just before the speech pause.

2. A transmission system as claimed in Claim 1, characterized in that the memory (12) comprises a first sub-memory (121) for storing the predefined excitation signals and a second sub-memory (122) for storing additional excitation signalsand in that the speech coder comprises means for writing in the second sub-memory (122) and outside speech pauses the sum of a weighted excitation signal of the first sub-memory (121) and a weighted excitation signal of the second sub-memory (122), and for writing in the second sub-memory (122) during speech pauses a signal derived from the speech signaljust before the speech pause.

3. A transmitter for transmitting a speech signal, comprising a speech coder that has a code book memory (12) for storing excitation signals, a filter arrangement (16) for filtering the excitation signals (14, 18, 20) and selection means for comparing a signal derived from the speech signal with the output signal of the filter (16), and for selecting the optimum excitation signal, and which transmitter includes a detector (26) for detecting speech pauses and for turning off at least parts of the speech coder when a speech pause is detected, characterized in that the detector (26) is provided for turning off the selection means (14, 18, 20) in the case of speech pauses and for applying to the filter (16) a signal derived from the speech signal just before the speech pause.

4. A transmitter as claimed in Claim 3, characterized in that the memory (12) comprises a first sub-memory (121) for storing predefined excitation signals and a second sub-memory (122) for storing additional excitation signals and in that the speech coder comprises means for writing in the second sub-memory (122) and outside speech pauses the sum of a weighted excitation signal of the first sub-memory (121) and a weighted excitation signal of the second sub-memory (122), and for writing in the second sub-memory (122) during speech pauses a signal derived from the speech signal just before the speech pause.

5. A mobile radio set comprising a transmitter for transmitting a speech signal, comprising a speech coder that has a code book memory (12) for storing excitation signals, a filter arrangement (16) for filtering the excitation signals, has selection means (14, 18, 20) for comparing a signal derived from the speech signal with the output signal of the filter, and for selecting the optimum excitation signal, and which transmitter includes a detector (26) for detecting speech pauses and for turning off at least parts of the speech coder when a speech pause is detected, characterized in that the detector (26) is provided for turning off the selection means (14, 18, 20) in the case of speech pauses and for applying to the filter (16) a signal derived from the speech signal just before the speech pause.

6. A mobile radio set as claimed in Claim 5, characterized in that the memory (12) comprises a first sub-memory (121) for storing predefined excitation signals and a second sub-memory (122) for storing additional excitation signals and in that the speech coder comprises means for writing in the second sub-memory (122) and outside speech pauses the sum of a weighted excitation signal of the first sub-memory (121) and a weighted excitation signal of the second sub-memory (122), and for writing in the second sub-memory (122) during speech pauses a signal derived from the speech signal just before the speech pause.

7. A method of transmitting a speech signal, which method includes storing excitation signals, filtering the excitation signals, comparing a signal derived from the speech signal with the filtered excitation signal, selecting the optimum excitation signal and detecting speech pauses and turning off at least parts of the means for executing the method when a speech pause is detected, characterized in that the method further includes the suppression of the selection means when there are speech pauses and applying to the filter a signal derived from the speech signal just before the speech pause.

8. A method as claimed in Claim 7, characterized in that the memory (12) comprises a first sub-memory (121) for storing predefined excitation signals and a second sub-memory (122) for storing additional excitation signals, in that the sum of a weighted excitation signal of the first sub-memory (121) and a weighted excitation signal of the second sub-memory (122) is written in the second sub-memory (122) outside speech pauses, and the signal derived from the speech signal just before the speech pause is written in the second sub-memory (122) during speech pauses.

## Revendications

1. Système de transmission en vue de la transmission d'un signal de parole avec un émetteur qui contient un codeur de parole doté d'une mémoire (12) en vue de l'enregistrement de signaux d'excitation, d'un dispositif de filtrage (16) en vue du filtrage des signaux d'excitation et de moyens de sélection (14, 18, 20) en vue de la comparaison d'un signal dérivé du signal de parole et du signal de sortie du filtre (16) et en vue de la sélection du signal d'excitation optimal, l'émetteur (2) comprenant par ailleurs un détecteur (26) en vue de la reconnaissance des pauses de parole et en vue de la désactivation d'au moins des parties du codeur de parole en cas de pauses de parole reconnues et des moyens (3) en vue de la transmission d'une indication du signal d'excitation optimal à un récepteur (5) qui est doté d'un décodeur de parole (6) en vue de la reproduction du signal d'excitation optimal et du signal de parole,
caractérisé en ce que le détecteur (26) est prévu pour désactiver les moyens de sélection (14, 18, 20) en cas de pauses de parole et pour amener au filtre (16) un signal dérivé respectivement du dernier signal de parole avant la pause de parole.

2. Système de transmission selon la revendication 1,
caractérisé en ce que la mémoire (12) est munie d'une première mémoire partielle (121) en vue d'enregistrer des signaux d'excitation déterminés et d'une deuxième mémoire partielle (122) en vue d'enregistrer des signaux d'excitation supplémentaires et que le codeur de paroles est doté de moyens pour enregistrer en dehors des pauses de parole dans la deuxième mémoire partielle (122) la somme d'un signal d'excitation pondéré de la première mémoire partielle (121) et d'un signal d'excitation pondéré de la deuxième mémoire partielle (122) et enregistrer pendant les pauses de parole dans la deuxième mémoire partielle (122) un signal dérivé respectivement du dernier signal de parole précédant la pause de parole.

3. Emetteur en vue de la transmission d'un signal de parole avec un codeur de parole avec une mémoire de code (12) en vue de l'enregistrement de signaux d'excitation, un dispositif de filtrage (16) en vue du filtrage des signaux d'excitation et des moyens de sélection (14, 18, 20) en vue de la comparaison d'un signal dérivé de signal de parole et du signal de sortie du filtre (16) et en vue de la sélection du signal d'excitation optimal et avec un détecteur (26) en vue de la reconnaissance de pauses de parole et en vue de la désactivation d'au moins des parties du codeur de parole en cas de pause de parole reconnue,
caractérisé en ce qu'un détecteur (26) est prévu pour désactiver les moyens de sélection (14, 18, 20) en cas de pauses de parole et en vue d'amener au filtre (16) un signal dérivé respectivement du signal de parole précédant la pause de parole

4. Emetteur selon la revendication 3,
caractérisé en ce que la mémoire (12) est munie d'une première mémoire partielle (121) en vue de l'enregistrement de signaux d'excitation préalablement déterminés et d'une deuxième mémoire partielle (122) en vue de l'enregistrement de signaux d'excitation supplémentaires et que le codeur de parole est doté de moyens pour enregistrer en dehors des pauses de parole dans la deuxième mémoire partielle (122) la somme d'un signal d'excitation pondéré de la première mémoire partielle (121) et d'un signal d'excitation pondéré de la deuxième mémoire partielle (122) et, pendant les pauses de parole, enregistrer dans la deuxième mémoire partielle (122) un signal dérivé du signal de parole précédant la pause de parole.

5. Radiotéléphone mobile avec un émetteur en vue de la transmission d'un signal de parole qui contient un codeur de parole avec une mémoire de codes (12) en vue de l'enregistrement de signaux d'excitation, un dispositif de filtrage (16) en vue du filtrage des signaux d'excitation et des moyens de sélection (14, 18, 20) en vue de la comparaison d'un signal dérivé du signal de parole et du signal de sortie du filtre et en vue de la sélection du signal d'excitation et avec un détecteur (26) en vue de la reconnaissance des pauses de parole et en vue de la désactivation d'au moins des parties du codeur de parole en cas de pause de parole reconnue,
caractérisé en ce que le détecteur (26) est prévu pour désactiver les moyens de sélection (14, 18, 20) en cas de pauses de parole et pour amener au filtre (16) un signal dérivé du signal de parole précédant directement la pause de parole.

6. Radiotéléphone mobile selon la revendication 5,
caractérisé en ce que la mémoire (12) est dotée d'une première mémoire partielle (121) en vue de l'enregistrement de signaux d'excitation déterminés et d'une deuxième mémoire partielle (122) en vue de l'enregistrement de signaux d'excitation supplémentaires et que le codeur de parole est muni de moyens pour enregistrer en dehors des pauses de parole dans la deuxième mémoire partielle (122) la somme d'un signal d'excitation pondéré de la première mémoire partielle (121) et d'un signal d'excitation pondéré de la deuxième mémoire partielle (122) et enregistrer, pendant les pauses de parole, un signal dérivé du signal de parole précédant directement la pause de parole dans la deuxième mémoire partielle (122).

7. Procédé de transmission d'un signal de parole comprenant l'enregistrement de signaux d'excitation, le filtrage des signaux d'excitation, la comparaison d'un signal dérivé du signal de parole et du signal d'excitation filtré, la sélection du signal d'excitation optimal, la reconnaissance de pauses de parole et la suppression d'au moins des parties du procédé en cas de pause de parole reconnue,
caractérisé par la suppression de la sélection en cas de pauses de parole et l' apport au filtre d'un signal dérivé du signal de parole précédant respectivement la pause de parole.

8. Procédé selon la revendication 7,
caractérisé en ce que la mémoire (12) est dotée d'une première mémoire partielle (121) en vue de l'enregistrement de signaux d'excitation déterminés et d'une deuxième mémoire partielle (122) en vue de l'enregistrement de signaux d'excitation supplémentaires, la somme d'un signal d'excitation pondéré de la première mémoire partielle (121) et d'un signal d'excitation pondéré de la deuxième mémoire partielle (122) étant enregistrée en dehors des pauses de parole dans la deuxième mémoire partielle et le signal dérivé du signal de parole précédant directement la pause de parole étant enregistré pendant les pauses de parole dans la deuxième mémoire partielle (122).
